# EUROPEAN PATENT APPLICATION

(11) **EP 1 420 329 A1**
(43) Date of publication of application: **19.05.2004**
(21) Application number: 03024970.0
(22) Date of filing: 29.10.2003
(51) Int. Cl.: G06F 1/18

(54) **Electronic apparatus having lid to cover memory receptacle**

(30) Priority: 15.11.2002 JP 2002331972
(71) Applicant: Kabushiki Kaisha Toshiba, Tokyo (JP)
(72) Inventor: Nakatani, Masato, Toshiba Corporation, Minato-ku Tokyo 105-8001 (JP); Nakajima, Yuji, Toshiba Corporation, Minato-ku Tokyo 105-8001 (JP)
(74) Representative: Henkel, Feiler & Hänzel

(57) **Abstract**

An electronic apparatus (1) includes a housing (4) which has an opening portion (16) and a conductive circumference (16a, 16b, 16c, 16d) of the opening portion (16). In the inside of the housing (4), there is provided a receptacle (10) in which a circuit component (11) is removably contained through the opening portion (16). The opening portion (16) is covered by a conductive lid (25). The lid (25) has a circumference (26) overlapping the conductive circumference (16a, 16b, 16c, 16d) of the opening portion (16), an inner surface (27) exposed to the receptacle (10), and a shielding wall (28a, 28b, 28c, 28d) projecting from the inner surface (27) toward the receptacle (10). The housing (4) has a wall (18) which extends from the conductive circumference (16a, 16b, 16c, 16d) of the opening portion (16), along the shielding wall (28a, 28b, 28c, 28d), when the lid (25) covers the opening portion (16).

## Description

The present invention relates to an electronic apparatus which permits addition of circuit components such as a memory module, and in particular to a structure to prevent leakage of electromagnetic noise. generated by an added circuit component.

An electronic apparatus such as a portable computer has a memory receptacle to hold a memory module. The memory receptacle is located inside the housing of the apparatus. The memory receptacle has an opening in the bottom wall of the housing. The opening is used to insert and remove the memory module into/from the memory receptacle. The opening is covered by a removable lid.

In an electronic apparatus which permits addition of a memory module, a noise protection means is necessary to prevent leakage of electromagnetic noise generated by the memory module. Thus, if the housing and lid are made of synthetic resin, in the conventional apparatus, the insides of the housing and lid are covered by a conductive layer, and the conductive layers of the housing and lid are electrically connected through a plurality of earth springs.

The conventional lid is flat like a plate, and the outer circumference of the lid is fitted in the bottom wall of the housing. In this structure, a path to propagate electromagnetic noise may be left in the part where the outer circumference of the lid is fitted in the bottom wall. The electromagnetic noise generated by the memory module enters this propagation path, but is attenuated while passing through the path. Therefore, in the present state, even if there is a path between the housing and lid, the leakage of electromagnetic noise to the outside of the housing is not a problem.

The circuit components such as a memory module for a portable computer will be increased in the processing speed. Thus, the increase of the electromagnetic noise generated by the circuit components is a worry, and the conventional structure with only the outer circumference of the lid fitted in the housing will not be able to cope with the increased electromagnetic noise. Therefore, the electromagnetic noise shielding efficiency may become insufficient.

Jpn. Pat. Appln. KOKAI Publication No. 4-151705 discloses a portable electronic apparatus which has a housing containing a magnetic disk unit. The apparatus has a receptacle opening in the upper surface of the housing. The receptacle is for housing the magnetic disk unit. A connector to connect the magnetic disk unit is arranged inside of the receptacle. The receptacle is covered by a removable lid. The lid has a rib projecting toward the receptacle. The rib is located opposite to the connector with the magnetic disk unit interposed therebetween. The rib prevents the magnetic disk unit from moving in the direction separating from the connector.

The rib of the above-mentioned lid is designed to hold the connection between the magnetic disk unit and the connector, and not to shield the electromagnetic noise generated by the magnetic disk unit. Therefore, the above-mentioned prior art does not describe the noise protection measure to attenuate the electromagnetic noise generated by the magnetic disk unit.

It is an object of the present invention to provide an electronic apparatus which can suppress the leakage of electromagnetic noise to the outside of a housing, even if the electromagnetic noise generated by a circuit component is increased.

In order to achieve the above object, an electronic apparatus according to an aspect of the present invention includes a housing which has an opening portion and a conductive circumference of the opening portion. In the inside of the housing, there is provided a receptacle in which a circuit component is removably contained through the opening portion. The opening portion is covered by a conductive lid. The lid has a circumference overlapping the conductive circumference of the opening portion, an inner surface exposed to the receptacle, and a shielding wall projecting from the inner surface toward the receptacle. The housing has a wall which extends from the conductive circumference of the opening portion along the shielding wall of the lid, when the opening portion is covered by the lid.

In this structure, when the opening portion of the housing is covered by the lid, the shielding wall of the lid faces the wall of the housing. Thus, the propagation path formed between the lid and the housing is made longer and bent into a complicated shape. As a result, when the circuit component generates electromagnetic noise during operation, the electromagnetic noise is largely attenuated by the propagation path. Therefore, the electromagnetic noise shielding effect is increased.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view of a portable computer according to an embodiment of the present invention;
FIG. 2 is a plan view of the portable computer showing the positional relationship between a bottom wall and a lid of a housing;
FIG. 3 is a perspective view of the portable computer showing the state with the lid removed from the bottom wall of the housing and a memory receptacle exposed;
FIG. 4 is a perspective view of the portable computer showing the state with a thermal diffusion sheet folded and a memory module exposed;
FIG. 5 is a sectional view of the portable computer showing the positional relationship among the memory receptacle of the housing, the memory module, the thermal diffusion sheet and the lid;
FIG. 6 is a perspective view of the lid having first to fourth shielding walls;
FIG. 7 is a sectional view showing the-state with the lid and the memory receptacle connected electrically;
FIG. 8 is a sectional view showing the positional relationship between a slit and a conductive layer;
FIG. 9 is a sectional view showing the positional relationship between the lid and an earth spring;
FIG. 10 a perspective view showing the state with the earth spring fixed to a flange of the housing;
FIG. 11 is a perspective view showing the positional relationship between the slit and an engaging part;
FIG. 12 is a sectional view showing the state with the projection of the engaging part contacting an extension wall; and
FIG. 13 is a sectional view of the thermal diffusion sheet.

Embodiments of the present invention will be explained hereinafter based on the drawings applied to a portable computer.

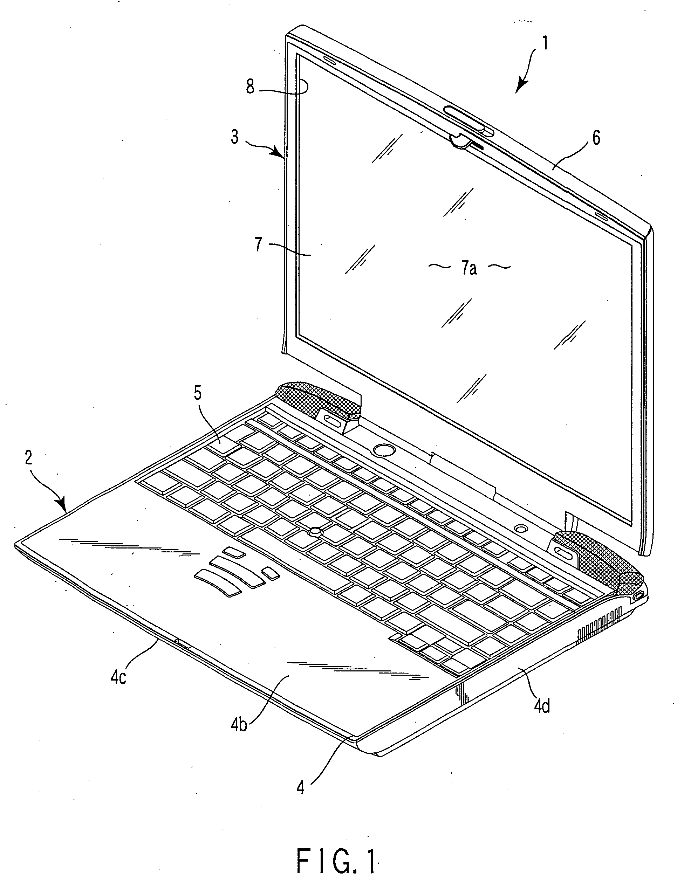

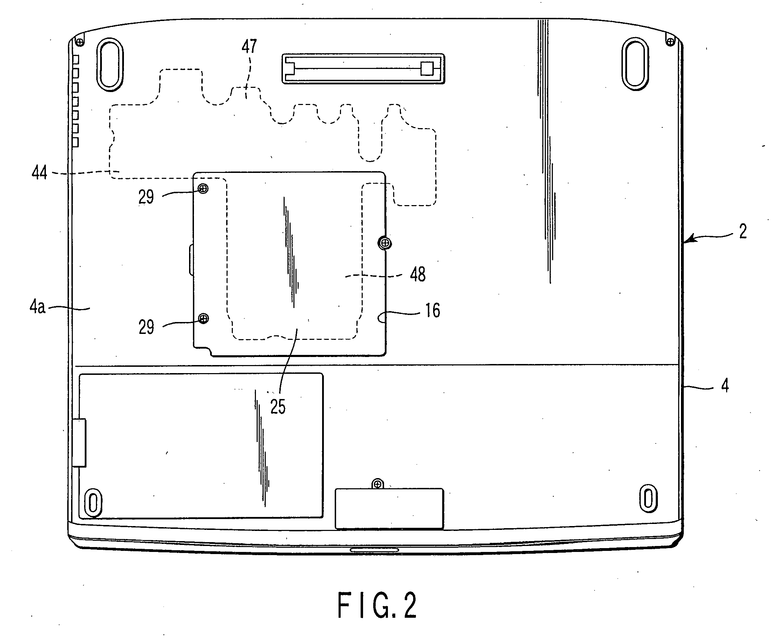

FIG. 1 and FIG. 2 show a portable computer 1 as an electronic apparatus. The portable computer 1 has a main unit 2 and a display unit 3. The main unit 2'has a box-like housing 4. The housing 4 is made of a conductive metallic material, for example, magnesium alloy. The housing 4 has a bottom wall 4a, an upper wall 4b, a front wall 4c, left/right side walls 4d and a not-shown rear wall. The upper wall 4b of the housing 4 supports a keyboard 5.

The display unit 3 has a display housing 6, and a liquid crystal display panel 7 contained in the display housing 6. The liquid crystal display panel 7 has a screen 7a. The screen 7a is exposed outside of the display housing 6 through an opening 8 formed in the front side of the display housing 6.

The display housing 6 is supported at the rear end of the housing 4 through a not-shown hinge. Thus, the display unit 3 is rotatable between a closed position and an opened position. In the closed position, the display unit 3 lies on the housing 4, covering the upper wall 4b and keyboard 5. In the opened position, the display unit 3 rises against the housing 4, exposing the keyboard 5 and screen 7a.

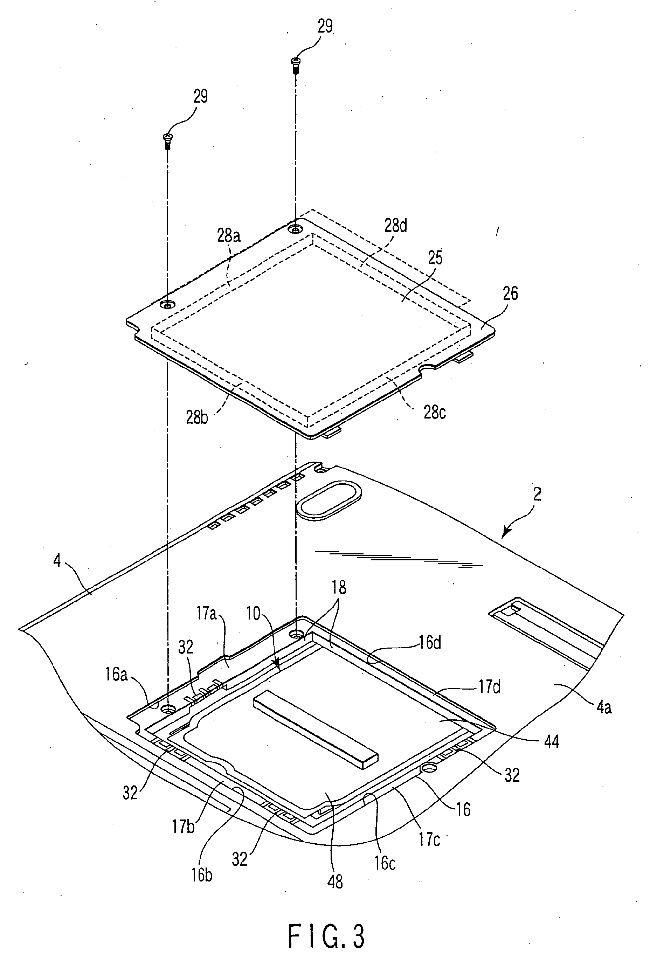

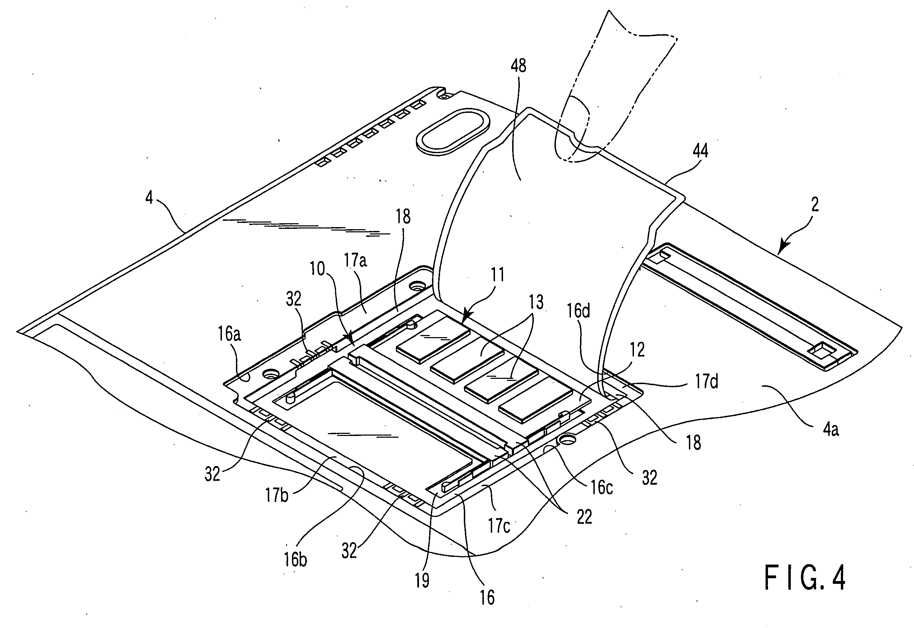

FIG. 3 and FIG. 4 show the housing 4 turned over with the bottom wall 4a of the housing 4 faced up. As shown from these drawings, the housing 4 has a memory receptacle 10 accessible by the user. The memory receptacle 10 can house a memory module 11 as a circuit component, and is located inside of the housing 4. In this embodiment, the memory receptacle 10 is sized to be able to contain two memory modules 11 placed side by side.

The memory module 11 has a substrate 12, and a plurality of circuit elements 13 mounted on the substrate 12. The substrate 12 has a terminal part 12a at its one end. The circuit element 13 is an SDRAM having a DDR (Double Data Rate) mode, for example. As the data transmission speed increases, so does the electromagnetic noise generated, further, the neat value also increases, which cannot be ignored.

The memory receptacle 10 is defined by a recess 15 formed in the bottom wall 4a of the housing 4. The recess 15 has a rectangular opening portion 16. The opening portion 16 is used to insert and remove the memory module 11 into/from the memory receptacle 10, and is opened in the bottom wall 4a of the housing 4. The bottom wall 4a has four circumference edges 16a, 16b, 16c and 16d defining the opening portion 16.

As shown in FIG. 3 to FIG. 5, the recess 15 has first to fourth flanges 17 extending from the circumference edges 16a - 16d of the bottom wall 4a toward the opening portion 16, four standing walls 18 projecting from the front ends of these flanges 17a - 17d, and a bottom wall 19 facing the opening portion 16. The first to fourth flanges 17a - 17d, the standing walls 18 and the bottom wall 19 are made in one body with the housing 4, and have electrical conductivity. The standing walls 18 have the front ends located opposite to the opening portion 16. The front ends of the standing walls 18 are connected to the outer circumference of the bottom wall 19.

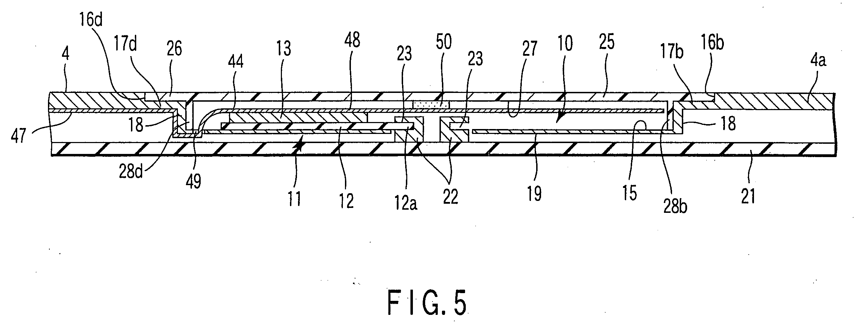

As shown in FIG. 5, the housing 4 contains a printed wiring board 21. The printed wiring board 21 is located horizontal along the bottom wall 19 of the recess 15. A pair of connectors 22 are mounted in the lower side of the printed wiring board 21. The connectors 22 are located parallel to each other along the width direction of the housing 4, and projected to the center of the memory receptacle 10, penetrating the bottom wall 19 of the recess 15. Each connector 22 has a terminal connection port 23.

The memory module 11 is held by the memory receptacle 10 by inserting the terminal part 12a of the substrate 12 into the terminal connection port 23 of the connector 22. In this state, the memory module 11 is electrically connected to the printed wiring board 21, and the heating circuit elements 13 faces the opening portion 16.

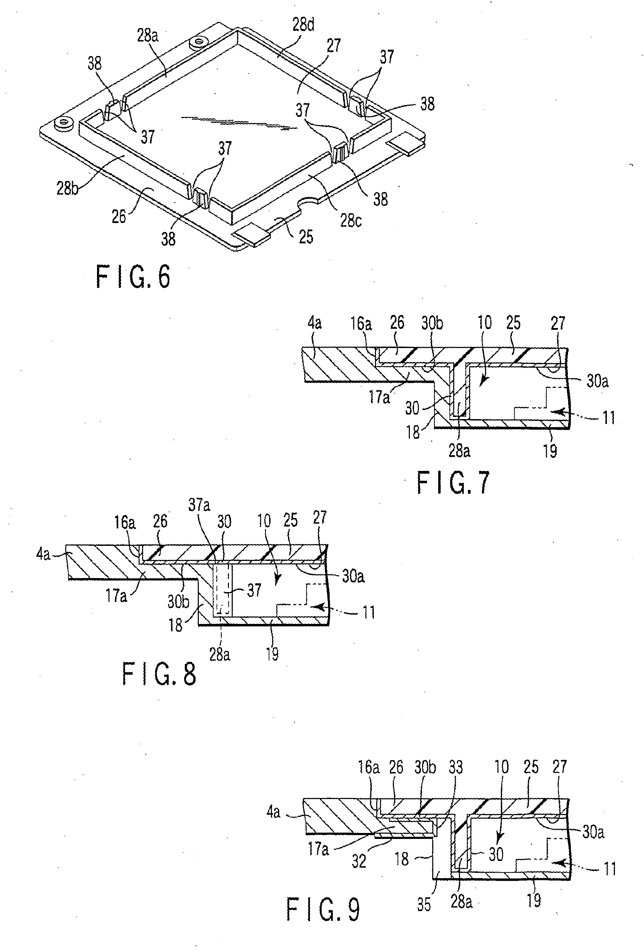

The opening portion 16 of the bottom wall 4 is covered by a synthetic resin lid 25. As shown in FIG. 3 and FIG. 6, the lid 25 is a square plate with the size corresponding to the opening portion 16. The lid 25 has a circumference 26 overlapping with the first to fourth flanges 17a - 17d, an inner surface 27 exposed to the memory receptacle 10, and first to fourth shielding walls 28a - 28d projecting from the inner surface 27 toward the memory receptacle 10. The first to fourth shielding walls 28a - 28d are fit inside the standing walls 18 of the memory receptacle 10, and overlapped with the standing walls 18.

In other words, when the lid 25 covers the opening portion 16, the four standing walls 18 of the memory receptacle 10 extend from the first to fourth flanges 17a - 17d of the memory receptacle 10 toward the bottom wall 19 of the memory receptacle 10, along the first to fourth shielding walls 28a - 28d of the lid 25. Thus, the four standing walls 18 and the first to fourth shielding walls 28a - 28d surround the memory module 11 contained in the memory receptacle 10.

As shown in FIG. 2 and FIG. 3, the lid 25 is fixed to the bottom wall 4a of the housing 4 through a pair of screws 29. By this fixing, the memory receptacle 10 and memory module 11 are hidden, and the circumference 26 of the lid 25 is pressed to the first to fourth flanges 17a - 17d.

When the lid 25 is fixed to the housing 4, the part from the circumference 26 to the first to fourth shielding walls 28a - 28d of the lid 25 overlaps with the part from the first to fourth flanges 17a - 17d to the standing walls 18 of the housing 4. Therefore, the part where the lid 25 overlaps with the housing 4 becomes long by the length equivalent to the dimensions of the first to fourth shielding walls 28a - 28d and the standing walls 18, compared with the conventional apparatus. At the same time, the above overlapping part is bent like a crank having a plurality of corners halfway.

As shown in FIG. 7, at least the circumference 26, inner surface 27 and first to fourth shielding walls 28a - 28d of the lid 25 are covered by a conductive layer 30, for example, a plating layer. The conductive layer 30 contacts the first to fourth flanges 17a to 17d, the standing walls 18 and the bottom wall 19 of the memory receptacle 10.

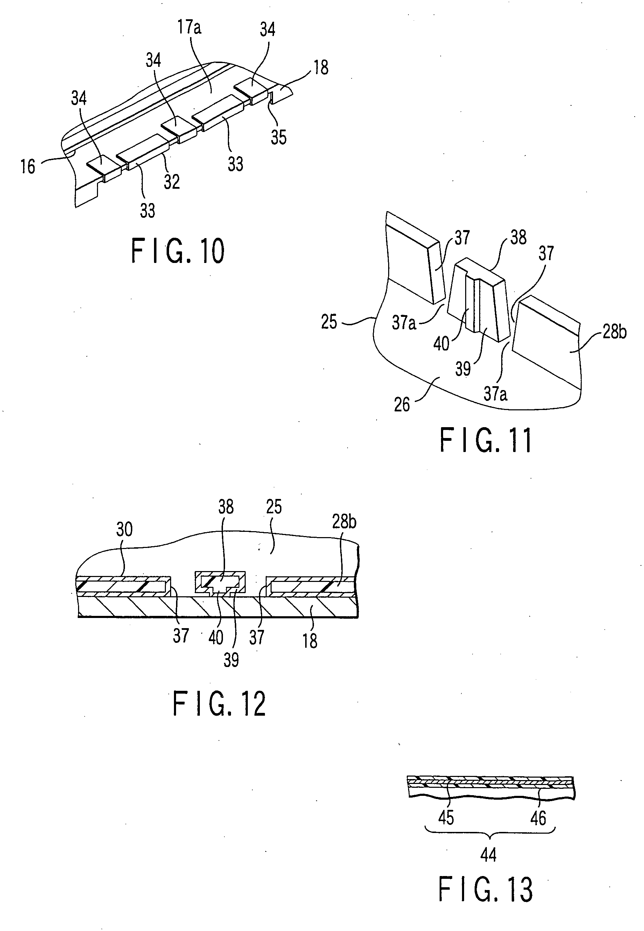

Further, an earth spring 32 is fixed to each of the first to third flanges 17a, 17b and 17c. As shown in FIG. 9 and FIG. 10, each earth spring 32 has a plurality of supporters 33 and a plurality of spring pieces 34. The supporters 33 are shaped to hold the first to third flanges 17a, 17b and 17c, and inserted from the inside of the opening portion 16 toward the first to third flanges 17a, 17b and 17c. The standing walls 18 continuing to the flanges 17a, 17b and 17c has notches 35 at the position corresponding to the earth springs 32, to facilitate the insertion of the supporters 33.

The spring pieces 34 are elastically deformable, and projects over the first to third flanges 17a, 17b and 17c, respectively. When the lid 25 is fixed to the bottom wall 4a of the housing 4, the spring pieces 34 are held between the first to third flanges 17a, 17b, 17c and the circumference 26 of the lid 25. Thus, each earth spring 32 contacts the conductive layer 30 of the lid 25, ensuring the electric connection between the conductive layer 30 and the housing 4.

As shown in FIG. 6, the first to fourth shielding walls 28a - 28d of the lid 25 have a pair of slits 37. The slits 37 are arranged with an interval, and cut toward the inner surface 27 of the lid 25 from the front ends of the first to fourth shielding walls 28a - 28d. These slits 37 have a bottom 37a located on the same plane as the inner surface 27 of the lid 25. The bottom 37a of the slit 37 is covered by the conductive layer 30.

The conductive layer 30 formed in the lid 25 is divided into an inside area 30a surrounded by the first to fourth shielding walls 28a - 28d, and an outside area 30b located outside of the first to fourth shielding walls 28a - 28d. These inside area 30a and outside area 30b are held in the electrically conducting state by the part of the conductive layer 30 covering the bottom 37a of the slit 37. Thus, even if the conductive layer 30 is interrupted at the front end of the shielding walls 28a - 28d, for example, the inside area 30a and outside area 30b of the conductive layer 30 will be held in the electrically conducting state.

As shown in FIG. 6, FIG. 11 and FIG. 12, the first to fourth shielding walls 28a - 28d have an engaging part 38. The engaging'part 38 is located between the slits 37, and separated from the shielding walls 28a - 28d by these slits 37. When the first to fourth shielding walls 28a - 28d are fit in the inside of the standing walls 18, the engaging part 38 can be elastically deformed to move towards or away from the standing walls 18.

As shown in FIG. 11, each engaging part 38 has a surface 39 facing the standing wall 18, and a projection 40 projecting from the surface 39. The projection 40 extends in the projecting direction of the shielding walls 28a - 28d. When the first to fourth shielding walls 28a - 28d are fit in the inside of the standing walls 18, the projection 40 slidably contacts the standing wall 18 of the housing 4. Thus, even if a gap to cause a dimension error is made between the standing wall 18 and the first to fourth shielding walls 28a - 28d, the looseness of the lid 25 can be cancelled.

When the projection 40 contacts the standing wall 18, the engaging part 38 of the lid 25 is elastically deformed to absorb the pressure generated in the contacting part between the projection 40 and the standing wall 18. This prevents generation of a large sliding resistance in the contacting part between the projection 40 and the standing wall 18, when the lid 25 is mounted and removed.

On the other hand, a projection which slidably contacts the first to fourth shielding walls 28a - 28d of the lid 25 is formed in the four standing walls 18 of the housing 4, the metallic standing walls 18 are difficult to deform compared with the first to fourth shielding walls 28a - 28d made of synthetic resin. Thus, the projection is pressed by a strong force to the first to fourth shielding walls 28a - 28d. As a result, a large resistance is generated in the contacting part between the projection and the shielding walls 28a - 28d.

Therefore, if the projection 40 is formed in the elastically deformable engaging part 38 as in this embodiment, the generation of a large resistance can be avoided when mounting and removing the lid 25. As a result, the lid 25 can be easily mounted and removed.

A thermal diffusion sheet 44 is provided at the bottom of the housing 4. As shown in FIG. 13, the thermal diffusion sheet 44 has a copper film 45 with an excellent thermal conductivity, and an insulator film 46 to cover the copper film 45. The thermal diffusion sheet 44 has a rigidity capable of holding the flat form in a free state, and has flexibility to permit bending easily by hand.

As shown in FIG. 5, the thermal diffusion sheet 44 has a first part 47 and a second part 48. The first part 47 is stuck to the inside of the bottom wall 4a of the housing 4, and thermally connected to the bottom wall 4a. The second part 48 has a size corresponding to the memory receptacle 10. The second part 48 is guided to the memory receptacle 10 through a slit 49 opened in the peripheral edge of the recess 15. When the memory module 11 is contained in the memory receptacle 10, the second part 48 of the thermal diffusion sheet 44 is interposed between the circuit elements 13 of the memory module 11 and the inner surface 27 of the lid 25.

A spacer 50 is stuck to the surface of the second part 48 facing the lid 25. The spacer 50 is made of elastically deformable sponge, and contacting the inner surface 27 of the lid 25. Thus, the second part 48 of the thermal diffusion sheet 44 is pressed to the circuit elements 13, making the thermal connection between the thermal diffusion sheet 44 and the circuit elements 13.

In the portable computer 1 with the above configuration, the lid 25 covering the opening portion 16 in the memory receptacle 10 has the first to fourth shielding walls 28a - 28d projecting from the inner surface 27, surrounding the memory module 11. Further, the memory receptacle 10 has the standing walls 18 projecting from the first to fourth flanges 17a - 17d receiving the circumference 26 of the lid 25, along the first to fourth shielding walls 28a - 28d.

Thus, the total length of the part where the lid 25 overlaps with the housing 4 becomes long, and this part is bent like a crank. As a result, even if electromagnetic noise generated by the memory module 11 enters between the lid 25 and the housing 4, the electromagnetic noise is efficiently attenuated while passing through the bent part. Therefore, the electromagnetic noise attenuation value increases compared with the conventional apparatus, and the electromagnetic noise shielding effect increases. As a result, the leakage of electromagnetic noise to the outside of the housing 4 can be securely prevented.

Moreover, the increased electromagnetic noise shielding effect means that an external noise from the outside of the housing 4 becomes difficult to go into the memory receptacle 10. Therefore, the damage of the memory module 11 by external noise can be prevented, and the noise resistivity of the portable computer 1 is increased.

The memory receptacle of the above embodiment has the bottom wall facing the opening portion. However, the present invention is not restricted to this structure. It is also permitted to omit the bottom wall and to open the memory receptacle in the inside of the housing.

Further, the circuit component housed in the receptacle of the housing is not limited to a memory module. It is possible to use an extension card containing a chip set such as an MDC (Mobile Audio/Modem Daughter Card) or a modem unit.

In addition, the housing is not limited to a metal housing. A synthetic resin housing can be used. It will be appreciated that when the housing is made of synthetic resin, it is necessary to cover the inside of the housing by a conductive layer, for example, a plating layer.

## Claims

1. An electronic apparatus comprising:
a housing (4) including an opening portion (16) and a conductive circumference (16a, 16b, 16c, 16d) of the opening portion (16);
a receptacle (10) provided inside of the housing (4), and in which a circuit component (11) is removably contained through the opening portion (16); and
a conductive lid (25) removably covers the opening portion (16), the lid (25) having a circumference (26) overlapping the conductive circumference (16a, 16b, 16c, 16d) of the opening portion (16), and an inner surface (27) exposed to the receptacle (10), **characterized in that**
the lid (25) has a shielding wall (28a, 28b, 28c, 28d) projecting from the inner surface (27) toward the receptacle (10), and the housing (4) has a wall (18) which extends from the conductive circumference (16a, 16b, 16c, 16d) of the opening portion (16), along the shielding wall (28a, 28b, 28c, 28d) of the lid (25), when the lid (25) covers the opening portion (16).

2. The electronic apparatus according to claim 1, **characterized in that** the shielding wall (28a, 28b, 28c, 28d) of the lid (25) and the wall (18) of the housing (4) overlap each other, surrounding the circuit component (11) contained in the receptacle (10).

3. The electronic apparatus according to claim 1 or 2, **characterized in that** the receptacle (10) has a bottom wall (19) facing the opening portion (16), and the wall (18) is connected to the bottom wall (19).

4. The electronic apparatus according to claim 1 or 2, **characterized in that** the lid (25) is made of synthetic resin, the circumference (26), inner surface (27) and shielding wall (28a, 28b, 28c, 28d) of the lid (25) are covered by a conductive layer (30), and the conductive layer (30) is electrically connected to the conductive circumference (16a, 16b, 16c, 16d) of the opening portion (16) when the lid (25) covers the opening portion (16).

5. The electronic apparatus according to claim 4, **characterized in that** the shielding wall (28a, 28b, 28c, 28d) have at least one slit (37) cut from the front end toward the inner surface (27) of the lid (25), the slit (37) has a bottom (37a) continuing to the inner surface (27) of the lid (25), and the conductive layer (30) covers the bottom (37a) of the slit (37).

6. The electronic apparatus according to claim 4, **characterized in that** the shielding wall (28a, 28b, 28c, 28d) have a plurality of slits (37) cut from the front end toward the inner surface (27) of the lid (25), and an engaging part (38) which is formed between the adjacent slits (37) and is elastically deformable, slidably contacts the wall (18) of the housing (4) when the lid (25) covers the opening portion (16).

7. The electronic apparatus according to claim 6, **characterized in that** the engaging part (38) has a surface (39) facing the wall (18), and a projection (40) projecting from the surface (39).

8. The electronic apparatus according to claim 1, **characterized in that** the circuit component (11) is a memory module (11) having a substrate (12) and a plurality of circuit elements (13) mounted on the substrate (12).

9. The electronic apparatus according to claim 1, **characterized in that** the circuit component (11) generates electromagnetic noise during operation.
